# EUROPEAN PATENT APPLICATION

(11) **EP 1 783 545 A1**
(43) Date of publication of application: **09.05.2007**
(21) Application number: 05447245.1
(22) Date of filing: 04.11.2005
(51) Int. Cl.: G03B 21/00, G02B 21/20, G02B 7/00

(54) **A frame for positioning optical components of a projection device**

(71) Applicant: Barco, naamloze vennootschap., 8500 Kortrijk (BE)
(72) Inventor: Van den Bossche, Bart, 8520 Kuurne (BE); Halsberghe, Brecht, 8520 Kuurne (BE)
(74) Representative: Bird, William Edward

(57) **Abstract**

A frame (100) as subject of the present invention for positioning optical components (131, 210) of a projection device, is at least partially provided out of a polymer material. The frame has an outer surface, at least a part of this outer surface is a polymer outer surface (132, 133, 204, 205, 214, 215) provided out of a polymer material the frame is characterised in that at least a part of the polymer outer surface (132, 133, 204, 205, 214, 215) is provided with a deposited layer of UV-protection material for preventing UV-light emanating from said optical components (131, 210) from irradiating said polymer material.

The invention relates further to a method to provide a frame (100) for positioning optical components (131, 210) of a projection device, comprising the steps of
* Forming a polymer material into at least a polymer part (110, 120, 130, 201, 202) of the frame having an outer polymer surface (132, 133, 204, 205, 214, 215);
* providing a deposited layer of UV-protection material to at least part of the outer polymer surface (132, 133, 204, 205, 214, 215) of the polymer part (110, 120, 130, 201, 202) of said frame (100).

## Description

### Technical field of the invention

The present invention relates to frames for positioning optical components of a projection device and to a method to provide a frame for positioning optical components of a projection device.

### Background of the invention

Frames of projection devices, such as digital mirror device or digital micromirror device projector (hereafter DMD), projectors using a liquid crystal display (hereafter LCD), projectors using a liquid crystal on Silicon display (hereafter Lcos) and the like, are at present made out of one or more metal or polymer parts. Polymer materials, such as thermoplastic or thermoset polymer material, are preferred, because of the weight and cost of these materials. More in particular, the frames as a whole or in part, are provided by transfer or injection molding techniques of thermoset or thermoplastic polymer compounds. Thermoset materials are preferred, such as BMC or TMC compounds. This is because thermoset parts, once molded, show few or no crimping during cooling. This enables use of smaller dimension tolerances in designing the frames.

Several positioning points, ribs, supports and/or projections are provided during molding, together with the frame in total. When carefully designed, this reduces the number of milling or machining operations after molding to zero, and thus brings the cost of production down. On these positioning points, ribs or supports, the optical and possibly also other components are positioned in order to have them providing the light output, such as a light beam, as required by the projection device.

A surprisingly negative effect of light from the illumination source used with the optical components was noticed on the polymer material of the frame. The illumination of the frame creates however aging and degradation of the polymer material of the frame, because of the irradiation and thermal energy from the illumination source used with the optical components.
In order to cope with the irradiation and thermal energy, the polymer parts of the frame, exposed to irradiation and thermal energy, can be covered with an irradiation resistant material such as a self adhesive Aluminium tape. This tape protects indeed the underlying polymer material, however it has as disadvantage that the tape cannot follow or match the usually very complex shape of the frame part very accurately. Furthermore, the use of an aluminium tape at present used is very tedious and labour-intensive.

### Summary of the invention

It is an object of the present invention to provide an improved frame for positioning optical and possibly other components of a projection device. It is an advantage of the frame according to the present invention that it postpones aging and degradation of the frame due to irradiation of the frame, caused by the illumination used in the projection device. It is also an advantage of the frame according to the present invention to provide accurate positioning points, supporting ribs, supports or struts for the optical and possibly other components having less deviation over time due to exposure to heat, thermal energy or irradiation. It is also an advantage of the frame according to the present invention to provide accurate positioning points, supporting ribs, supports or struts for the optical and possibly other components having less deviation over time without machining after molding.

The above objectives are accomplished by a frame according to the present invention, having the features as set out in the characterizing portion of present claim 1.

The frame according to the present invention is at least partially provided out of a polymer material, which polymer material provides at least a part of the outer surface of the frame, hereafter the polymer outer surface. According to the present invention, at least a part of the polymer outer surface is provided with a deposited layer, e.g. a lacquer layer, of UV-protection material for preventing UV-light emanating from said optical components from irradiating the polymer material used in the frame. It has been found that when the UV-part of the light spectrum is prevented from irradiating the polymer frame by means of a deposited layer, e.g. lacquer layer, the polymer does not show aging or degradation (or shows reduced aging or degradation) due to the irradiation of the polymer by the illumination of the optical components, nor does it suffer from delamination of the deposited layer, e.g. lacquer layer, i.e. release of the deposited layer, e.g. lacquer layer from the underlying polymer surface. As a reduced amount or no aging or degradation occurs, the outer polymer surface keeps its shape and dimensions over time, resulting in positioning points, projections, supports or other identical means, being present at the outer polymer surface, to maintain their position and shape. Hence, the optical and possibly other components remain in a correct and stable position over time without deviation from their original position due to aging or degradation of the polymer material.

The term "optical components" is to be understood in its broadest sense, meaning e.g. lamps, lenses, illumination filters, prisms, mirrors, light modulating means such as LCD-elements and/or DMD-elements. According to the present invention, also other components such as fans, motors, sensors, microswitches, mechanical supports for pcb's or other components may be positioned on the frame.

The term "positioning points, projections, supports or other identical means" is to be understood as reference points, struts, projections, or any other possible means, which serves as reference point or buffers, helping to position the optical or other components, which are to be positioned on the frame, or which provide support to the optical or other components to maintain their position. Such positioning points may be fixed points, against which a component is statically positioned, or may be buffers, circumscribing the range in which a dynamic component may move, this is translate or rotate.

The term "UV-light" is to be understood as light having a wavelength in the range of 425 nm to 10 nm. It is understood that according to the present invention, the lacquer layer is to prevent UV-light with a wavelength in the near UV-spectrum, being 425 nm to 200 nm, to irradiate the polymer material of the frame, as this is the spectrum which is most likely present in the light used be the projection devices.

According to the present invention, the term "deposited layer" is to be understood as a layer deposited directly on the polymer outer surface.

According to the present invention, the term "deposited" is to be understood as a layer being provided using a technique such as e.g. spraying on the layer, painting, sputtering, cladding, vapour deposition of the layer, e.g. by chemical of physical vapour deposition, by submerging or dipping the part of the polymer outer surface in a liquid, which liquid comprises the UV-protective material, or providing the layer by a coating process such as spin-coating, solvent coating or powder coating, electrostatic powder coating as well as by other means such as by electrochemical deposition, by plating, etc. The term "cladding" is to be understood as a technique where powder, e.g. metal powder, is blown to the surface and cured to provide a sintered like layer. As an example, laser cladding may be used, where metal powder is blown to the surface and together with the power of a laser beam is cured, resulting in a sintered like layer.

Preferably the deposited layer, e.g. lacquer layer is provided in a thin layer, this is a layer having an average thickness in the range of 1µm to 50µm, more preferred in the range of 1µm to 30µm, such as in the range of 1µm to 20µm, e.g. 10µm. Such thin layers have the advantage that they can be provided in a uniform and predictable way, which further improves the correctness and stable positioning over time without deviation from their original position of the positioning points, projections, supports or other identical means.

According to the present invention, a UV-reflective or a UV-absorbing deposited layer, e.g. a UV-reflective or a UV-absorbing lacquer layer, may be used. The lacquer layer may be provided using different techniques such as spraying of the lacquer, vapour deposition of a lacquer layer, e.g. by chemical of physical vapour deposition, by submerging or dipping the part of the polymer outer surface in a liquid, which liquid comprises lacquer and a solvent, or providing a lacquer layer by spin-deposited layer or powder deposited layer. The deposited layer may also be a reflective layer, e.g. a metal layer provided by chemical or physical deposition, electrochemical deposition, plating, sputtering, cladding, etc.

The lacquer layer preferably is a thermally stable lacquer layer, more preferred a silicon-based lacquer. Alternatively, the deposited layer can be a Chromium-, Nickel-, Copper-, aluminium- or Magnesium-based layer.. Also the deposited layer may be a layer of Chromium, Nickel, Copper, aluminium or Magnesium, directly applied on the surface.

The term "thermally stable" is to be understood as being resistant to temperatures up to 200°C. In some areas, resistance to even higher temperatures may be envisaged. Especially in the area close to a lamp, local temperature can be high. Normally these areas are cooled with fans, but the deposited layers should however be capable of withstanding not only UV light but also heat. On hot spots, temperatures could be even very high (250 to 350 degrees Celsius).

According to an aspect of the present invention, the frame is at least partially provided out of a polymer material, which polymer material is at least partially present at the outer surface of the frame, being the outer polymer surface. Possibly, even preferably, the whole frame is provided out of polymer material. The polymer material may be either a thermoset polymer compound, such as polyester compounds, and may optionally also comprise inorganic reinforcement such as glass-reinforcing elements, e.g. glass fibers or glass particle reinforcement. As an example bulk molding compound (hereafter BMC) or thick molding compound (hereafter TMC) may be used. Preferably the polymer compound is a polyester compound, such as a compound consisting of Vinyl Esther with about 20 % glass. Alternatively a thermoplastic compound may be used such as glass fiber reinforced PPS (PolyPhenylSulfide), used for lamp housings.

It is another object of the present invention to provide an improved projection device. It is an advantage of the projection device according to the present invention that it has a longer lifetime and which to a smaller extent suffer from frames aging or showing degradation due to irradiation of the frame, caused by the illumination used by the projection device. It is also an advantage of the projection device according to the present invention to provide positioning points, projections, supports or other identical means for the optical and possibly other components having less deviation over time due to exposure to heat, thermal energy or irradiation, and hence having a more accurate functioning optical means over time. These objectives are accomplished by a projection device comprising a frame according to the present invention, having the features as set out in the characterizing portion of present claim 1. Projection devices as subject of the present invention are to be understood as any kind of projection devices, such as e.g. digital mirror device or digital micromirror device projector, projectors using a liquid crystal display, projectors using a Liquid crystal on Silicon (LCOS) display and the like.

It is another object of the present invention to provide a method to manufacture improved frames for positioning optical and possibly other components of a projection device. According to the present invention, a frame for positioning optical components of a projection device, comprising the steps of
i. Forming a polymer material, providing at least a polymer part of the frame having an outer polymer surface;
ii. providing a deposited layer of UV-protection material to at least part of the outer polymer surface of the polymer part of the frame.

The forming may be any method of molding such as injection or transfer molding. The forming of the frame may also be provided by assembly of several polymer parts. The frame may be assembled together to form a frame completely out of polymer material. Possibly, the frame is provided as a one-piece transfer or injection molded frame. Alternatively the frame may comprise also non-polymer parts, such as metal parts (e.g. insert nuts).

At least an exposed part of the polymer outer surface of the polymer part of the frame is provided with a deposited layer, such as a lacquer layer, by using different techniques such as spraying, vapour deposition, e.g. by chemical of physical vapour deposition, by submerging or dipping the part of the polymer outer surface in a bath comprising the UV-protection material of the layer, or providing a layer by spin-coating or powder coating. The deposited layer may also be a reflective layer such as a metal layer, e.g. provided by electrochemical deposition, plating, sputtering or cladding. It is understood that the layer may be provided by only one of the techniques, or by combining two or more techniques to provide the layer.

In case the frame comprises more than one part, which parts are to be assembled in order to provide the frame, the deposited layer, e.g. lacquer layer may be provided by the different techniques prior or after assembling two or more parts of the frame.

Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows schematically an inner side of a projection device comprising an optical frame.
Fig. 2 is a detail of a frame part of the frame as is shown in Fig. 1.
Fig. 3 shows schematically one frame part of the frame as is shown in Fig. 1 and Fig. 2.
Fig. 4a, Fig. 4b, Fig. 4c, Fig. 4e, Fig. 5a, Fig. 5b, Fig. 5c, Fig. 5d and Fig. 5e show details of the frame parts together forming the frame part of Fig. 2.
In the different figures, the same reference signs refer to the same or analogous elements, surfaces of objects.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

The present invention is based on the finding that when using conventional aluminium self-adhesive tape very complex or small positioning points or projections can be covered by the tape to such an extent, that they can no longer fulfil their function of positioning the component adequately. Further, when the projection device is being used, the thermal energy from the illumination source may cause the temperature at the aluminium tape to rise, causing the self-adhesive glue to release. Furthermore, if air is trapped under the tape, this air forms bubbles by expanding when temperature rises. This increases even more the tape not following or matching the surface of the underlying part of the frame. Also the irradiation of the polymer frame by the illumination source of the projector can result in degradation of the frame material and lead to distortions or pulverised material of the frame.

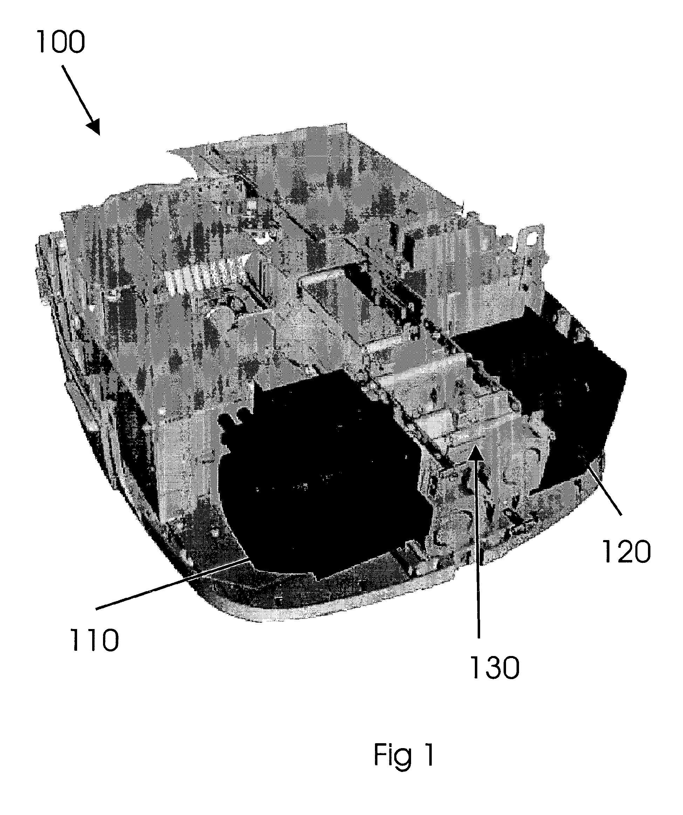

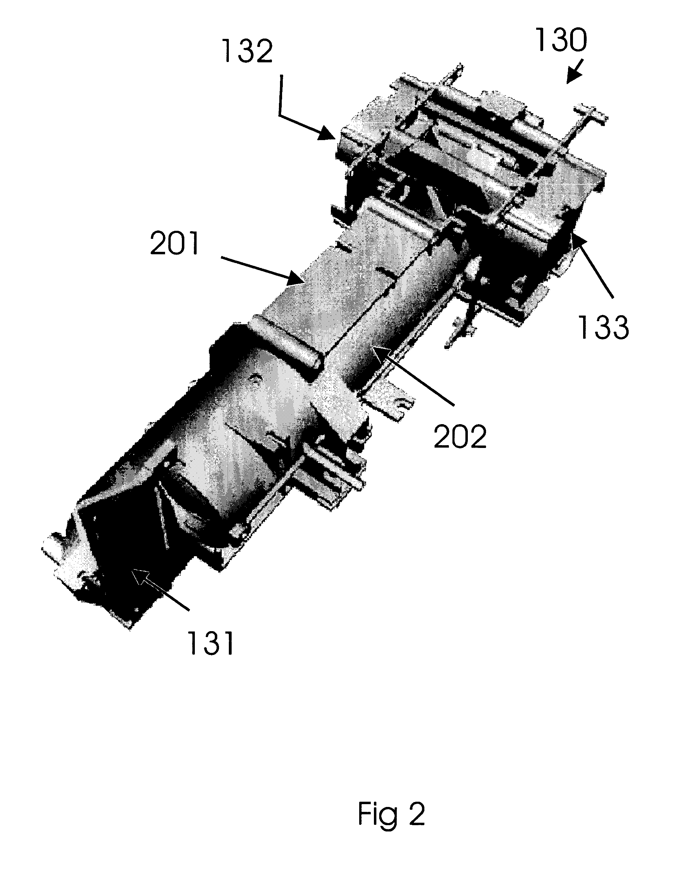

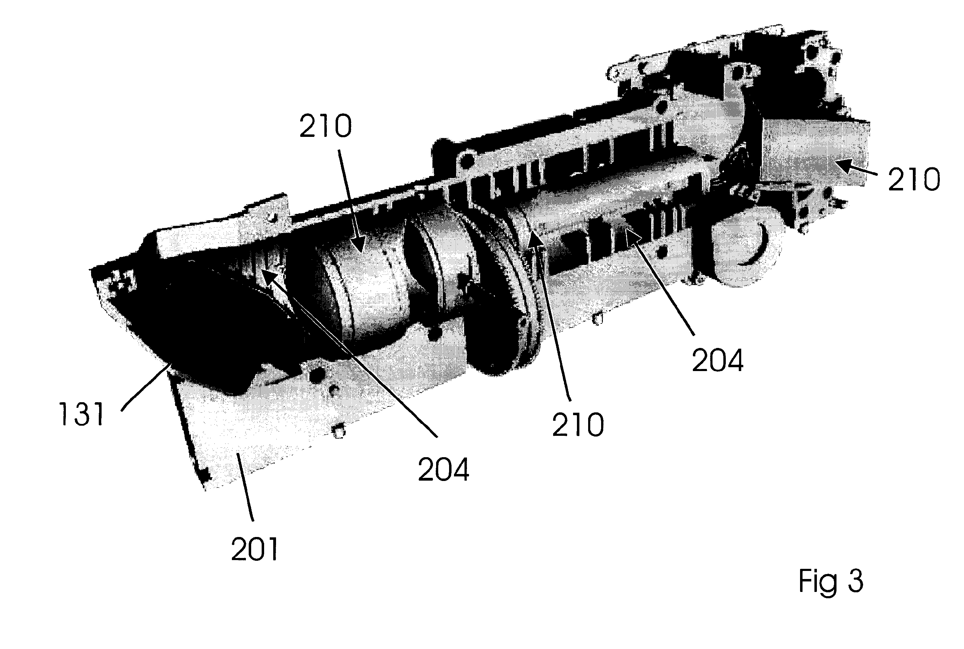

In Fig. 1, an inner side of a projection device comprising an optical frame 100 is shown. In this frame, three frame parts 110, 120 and 130 for positioning optical components of a projection device are shown. Frame parts 110 and 120 are frame parts to hold a lamp, whose illumination is used to generate images, which are to be projected by the projection device. The light provided by lamps held in frame parts 110 and 120, is guided by several optical components in the frame part 130, towards a mirror 131, being an optical component, present at the end of frame part 130. This frame part 130 is shown in detail in Fig. 2. The two other frame parts 110 and 120 for holding lamps are assembled, in this embodiment fixed to the frame part 130 at two opposed end surfaces 132 and 133. The frame part 130 is actually provided out of two parts 201 and 202. As frame part 201 is shown in Fig. 3, several optical components (references 210 in the figures indicate some of the optical components) are hold in the frame part 201, next to the mirror 131. Frame part 202 is assembled to frame part 201 by means of a number of bolts, having the inner surfaces 204 and 205 of respectively frame parts 201 and 202 facing each other, creating a tunnel by which the light provided by the lamps held in frame parts 110 and 120 is guided to the mirror 131.

Frame parts 201 and 202 of frame part 130, and frame parts 110 and 120 are provided by any suitable forming technique and by any suitable material or materials of which a thermoset polymer compound is preferred, e.g. BMC material, e.g. BMC comprising polyester and glass reinforcing elements, or out of TMC, e.g. TMC consisting of vinyl ester with about 20 % glass. The forming may include an injection or transfer molding technique.

The surfaces 132, 133, 204, 205, 214 and 215, being polymer outer surfaces, may comprise positioning points, projections, supports or other identical means (references 300 in the figures indicate some of the positioning points, projections, supports or other identical means).

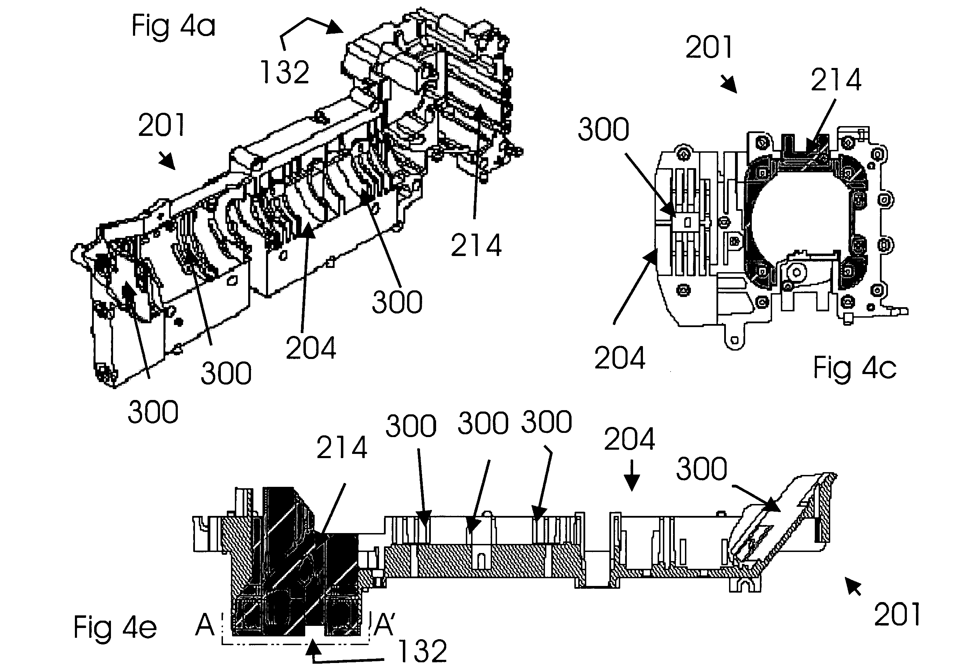

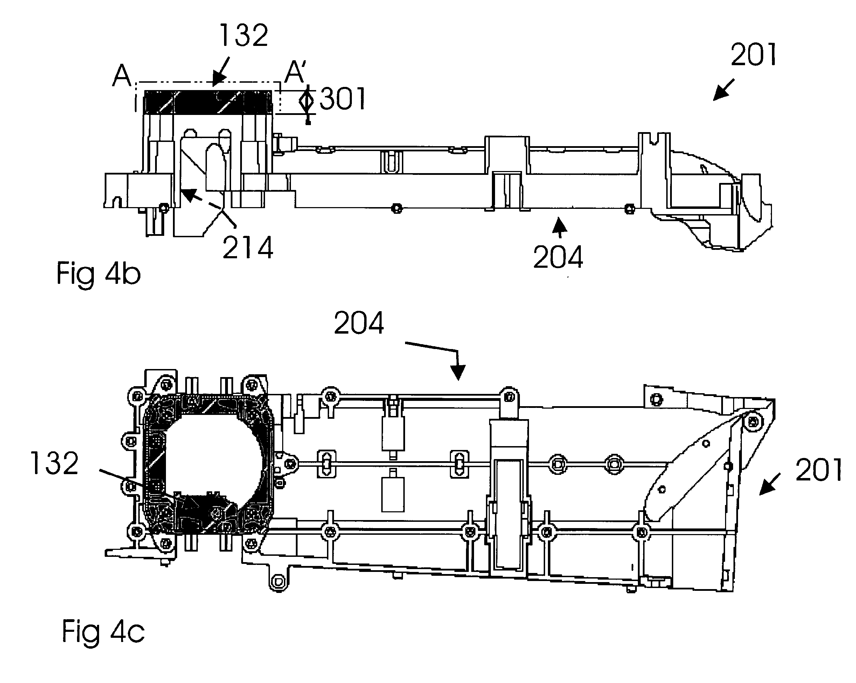

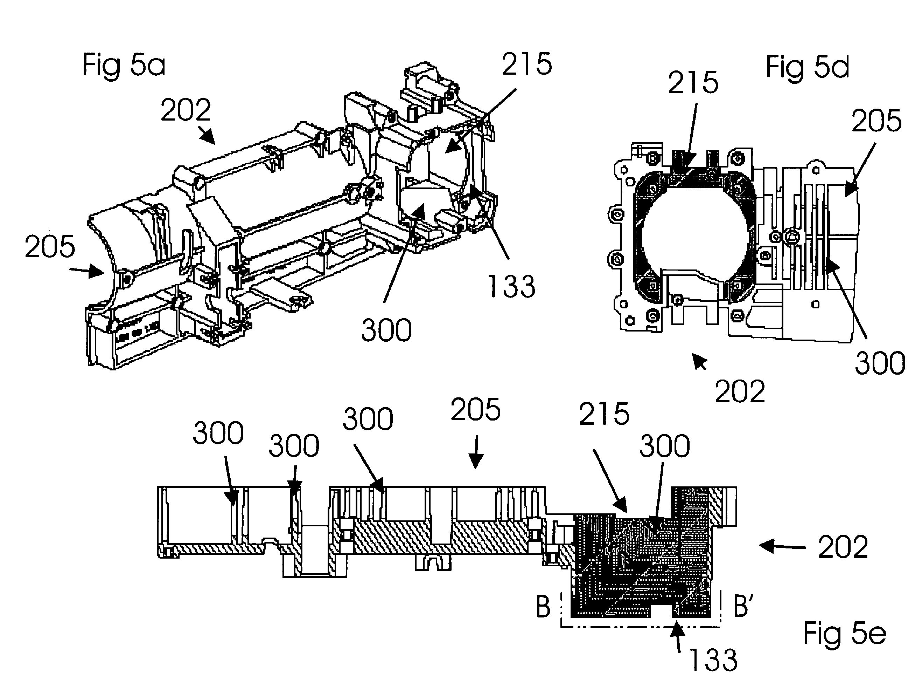

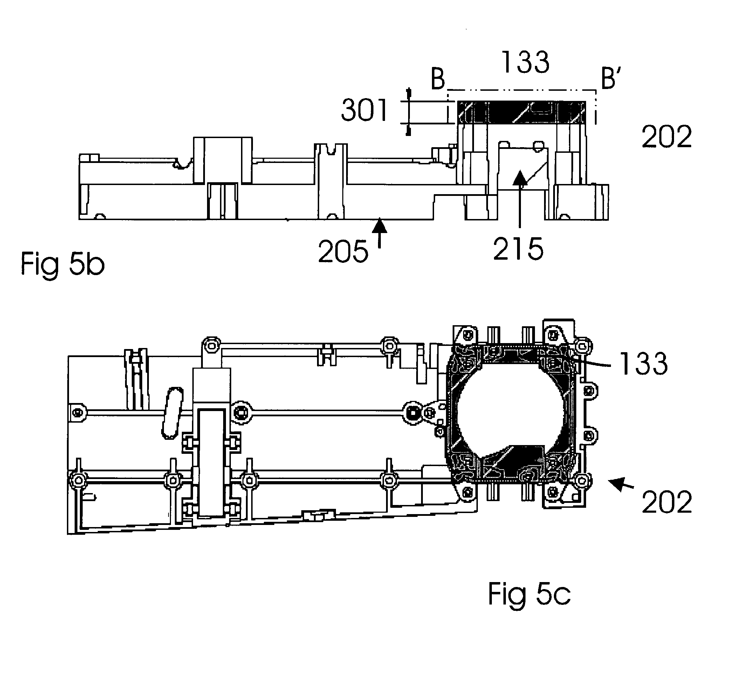

In order to increase lifetime of the frame parts, prevent the frame parts from aging or degradation, according to the present invention some parts of the outer surface of the polymer injection molded parts are provided with a deposited layer, e.g. a lacquer layer, of UV-protective material. This is shown more into detail in Fig. 4 and Fig. 5.

Fig. 4a shows schematically a perspective view of frame part 201, more in detail in Fig. 4b, Fig. 4b, Fig. 4d and a cross section of frame part 201 according to the plane AA' is shown in Fig. 4e. Fig. 5a shows schematically a perspective view of frame part 202, more in detail in Fig. 5b, Fig. 5b, Fig. 5d and a cross section of frame part 202 according to the plane BB' is shown in Fig. 5e.

According to a first embodiment of the present invention, the surface 204 and 205 of parts 201 and 202 which provide the tunnel by which the light provided by the lamps held in frame parts 110 and 120 is guided to the mirror 131, are provided with a UV-protective deposited layer, e.g. lacquer layer. Also the surface 214 and 215 at the inner side of part of the frames 201 and 202, in which the light of the lamps is guided over an angle into the tunnel is provided with a similar deposited layer, e.g. lacquer layer. Also the surfaces 132 and 133 of the frames 201 and 202 against which the frame parts 110 and 120 comprising the lamps are amounted, are provided with a similar UV-protective deposited layer, e.g. lacquer layer.

This deposited layer, e.g. lacquer layer can be a UV-absorbing lacquer layer, such as the product "DK52910" available from nv Flanders Color, Kortrijkstraat 380, 8560 Wevelgem, Belgium. DK52910 is a silicon based lacquer layer, comprising a silicone resin, comprising silicon and silicon oxide, having methyl- and ethyl and/or methyl phenyl side groups is provided. The side groups make the lacquer liquid. Additionally, the product comprises filler being carbon black. After being applied, by e.g. dipping, submerging, painting, coating or spraying, an curing step may be carried out, e.g. at temperatures of about 200°C to 250°C for pyrolitic decomposition of the side groups. A lacquer layer of a silicon and silicon oxide matrix, being a stoichiometric inorganic (SiO2)n-matrix is thus obtained, in which the carbon black filler is trapped. The so provided deposited layer is resistant to UV, protects the underlying polymer material from UV radiation, and is thermally stable to about 450°C.

As an alternative, using a lacquer comprising an Aluminium-filler may provide a similar silicon based lacquer layer. After being cured, this layer is resistant to temperatures of about 650°C. As another alternative, using a lacquer comprising a Fe-Mn oxide black-filler may provide a similar silicon based lacquer layer. After being cured, this layer is resistant to temperatures of about 500°C.

The deposited layer can have an average thickness in the range of more than 10 µm, such as e.g. more than 15µm to less than 25µm, e.g. less than 20µm, e.g. 12 µm. Thicker layers are not necessarily excluded from the present invention, but if the thickness is more than 25µm or even more than 100µm, the layers may tend to break because of thermal stresses during heating and cooling.

In order to further improve the adherence of the deposited layer to the polymer surface under increased temperatures, the polymer surface may be blasted, e.g. mildly sand blasting, prior to deposition of the layer.

Alternatively, a UV-reflecting deposited layer, e.g. a lacquer or metal layer is provided such as e.g. a Chromium layer provided by vapour deposition.

It is clear that in this embodiment, each surface of the outer polymer surface which may be illuminated or irradiated by the light emanating by an optical component held by the frame, is provided with a UV-protective deposited layer, e.g. lacquer layer. As usually, before the light enters into the tunnel created by sides 204 and 205, the light is to pass a UV-filter, the surfaces 204 and 205 need not be provided with a deposited layer, e.g. lacquer layer.

Spraying the lacquer onto the surfaces 132, 133, 214, 215 and possibly 204 and 205 is a preferred method of providing the UV protective deposited layer. Alternatively a part of the lacquer layer a the surfaces 132 and 133 is provided by emerging or dipping the frame parts 201 and 202 in a bath of liquid, which liquid comprises the lacquer and a solvent. A dip coated layer or layer provided by emerging is so provided. This emerging or dipping is done over an appropriate depth 301, so the surface onto which the lacquer is to be provided, has been wetted. Also chemical or physical vapour deposition, or spin-coating or powder coating may be used to provide the required surfaces with a lacquer layer.

It was found that, when using this lacquer layer at the surfaces as indicated, aging of the polymer material was prevented or significantly reduced. After several hundred of hours of irradiation, no aging of the polymer was noticed, not even near the lamps, where the temperature of the frame may raise to more than 200°C, such as on local hot spots to 250-350 degrees C. Neither were the positioning points, projections, supports or other identical means 300 deviated from their original position, nor were the positioning points, projections, supports or other identical means subjected to aging or degeneration. This resulted in an unchanged positioning of the optical components.

For the frames 110 and 120, being in total provided with the lacquer layer as mentioned above, identically no aging or deterioration due to irradiation was noticed after several hundreds, e.g. 1000 hours of use.
Similar frames without lacquer, provided out of the same polymer material, show degeneration of the polymer into powder, resulting in glass fibers being exposed out of the remaining polymer frame after less than 1000 hours of use.

The frame 100 as described above was provided by first providing the several frame parts 110, 120, 201 and 202 by injection of any suitable material or materials of which a thermoset polymer compound is preferred, e.g. BMC material, e.g. BMC comprising polyester and glass reinforcing elements, or out of TMC, e.g. TMC consisting of vinyl ester with about 20 % glass, in appropriately dimensioned molds. After molding and cooling the molded parts, the surfaces 133, 214, 215 and possibly 204 and 205 are provided with a lacquer layer, preferably by spraying the lacquer onto the surfaces in a substantially equal thickness. Possibly, the lacquer layer is hereafter cured, e.g. by thermal treatment of the frame parts.

As an example, a lacquer layer can be a UV-absorbing lacquer layer of the product "DK52910" available from nv Flanders Color, Kortrijkstraat 380, 8560 Wevelgem, Belgium is sprayed to the surfaces 133, 214, 215 and possibly 204 and 205, and thereafter, subjecting the frame parts to a temperature of 190°C during 20 minutes cures the lacquer layer of the frame parts. Alternatively, the lacquer layer may be provided to the surfaces 132 and 133 by emerging or dipping the frame parts 201 and 202 in a bath of liquid, which liquid comprises the lacquer and a solvent. Also chemical or physical vapour deposition, or spin-coating or powder coating may be used to provide the required surfaces with a lacquer layer.

After having provided the UV-protective layer, the frame parts are assembled, together with the optical and possibly other components, in order to provide the optical piece of equipment of the projection device as subject of the present invention.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. A frame (100) for positioning optical components (131, 210) of a projection device, said frame (100) being at least partially provided out of a polymer material, said frame having an outer surface, at least a part of said outer surface being a polymer outer surface (132, 133, 204, 205, 214, 215) provided out of said polymer material, **characterised in that** at least a part of said polymer outer surface (132, 133, 204, 205, 214, 215) is provided with a deposited layer of UV-protection material for preventing UV-light emanating from said optical components (131, 210) from irradiating said polymer material.

2. A frame (100) as in claim 1, wherein said deposited layer is a UV-reflective layer.

3. A frame (100) as in claim 1, wherein said deposited layer is a UV-absorbing layer.

4. A frame (100) as in any one of the claims 1 to 3, wherein said deposited layer has an average thickness of more than 1µm, said deposited layer having a thickness of less than 50µm.

5. A frame as in any one of the claims 1 to 4, wherein said polymer material is provided out of a thermoplastic polymer compound or a thermosetting polymer compound.

6. A frame (100) as in claim 5, wherein said thermosetting polymer compound is a BMC compound.

7. A frame (100) as in claim 5, wherein said thermosetting polymer compound is a TMC compound.

8. A frame (100) as in any one of the claims 5 to 7, wherein said
thermosetting polymer compound is a polyester compound or compirises vinyl ester and glass fibers.

9. A frame (100) as in any one of claims 5 to 8, wherein said polymer compound comprises an inorganic reinforcement such as glass reinforcing elements, more particularly glass fibers or glass particles.

10. A frame (100) as in any one of the claims 1 to 9, wherein said deposited
layer is a sprayed deposited layer, a cladded deposited layer. a sputtered deposited layer, or is a vapour deposited layer.

11. A frame (100) as in any one of the claims 1 to 9, wherein said deposited layer is a layer applied by dipping or submerging said frame in a liquid comprising said UV-protection material.

12. A frame as in any one of the claims 1 to 9, wherein said deposited layer is a spin coated layer.

13. A frame as in any one of the claims 1 to 12, wherein said deposited layer is a lacquer layer or a silicon resin-based layer.

14. A frame as in any one of the claims 1 to 12, wherein said deposited layer is a metal layer, such as Chromium-, Nickel-, Copper-, aluminium- or Magnesium-based layer.

15. A projection device comprising at least one frame (100) as in any one of the preceding claims.

16. A method to provide a frame (100) for positioning optical components (131, 210) of a projection device, comprising the steps of
(i) Forming a polymer material into at least a polymer part (110, 120, 130, 201, 202) of said frame having an outer polymer surface (132, 133, 204, 205, 214, 215);
(ii) providing a deposited layer of UV-protection material to at least part of the outer polymer surface (132, 133, 204, 205, 214, 215) of said polymer part (110, 120, 130, 201, 202) of said frame (100).

17. A method as in claim 16, wherein said frame (100) is completely provided by transfer or injection molding of a polymer material.

18. A method as in claims 16 or 17, wherein said frame is a one-piece transfer or injection molded frame.

19. A method as in any one of the claims 15 to 18, wherein said deposited layer is provided :
by submerging said at least part of the outer polymer surface (132, 133) of said polymer part (201, 202) of said frame (100) in a liquid comprising said UV-protection material, or
by dipping said at least part of the outer polymer surface of said polymer part of said frame in a liquid comprising said UV-protection material, or
by spin coating onto said at least part of the outer polymer surface of said polymer part of said frame or by spraying said UV-protection material onto said at least part of the outer polymer surface (204, 205, 214, 215) of said polymer part (201, 202) of said frame (100), or
by vapour deposition of a layer to said at least part of the outer polymer surface of said polymer part of said frame or by cladding of a layer to said at least part of the outer polymer surface of said polymer part of said frame, or
by sputtering of a layer to said at least part of the outer polymer surface of said polymer part of said frame.

## Amended claims

### Amended claims in accordance with Rule 86(2) EPC.

**1.** A frame (100) for positioning optical components (131, 210) of a projection device, said frame (100) being at least partially provided out of a polymer material, said frame having an outer surface, at least a part of said outer surface being a polymer outer surface (132, 133, 204, 205, 214, 215) provided out of said polymer material, **characterised in that** at least a part of said polymer outer surface (132, 133, 204, 205, 214, 215) is provided with a deposited layer of UV-pratection material for preventing UV-light emanating from said optical components (131, 210) from irradiating said polymer material, said deposited layer is a lacquer layer having being applied by dipping, submerging, painting, spin coating or spraying.

**2.** A frame (100) as in claim 1, wherein said deposited layer is a UV-reflective layer.

**3.** A frame (100) as in claim 1, wherein said deposited layer is a UV-absorbing layer.

**4.** A frame (100) as in any one of the claims 1 to 3, wherein said deposited layer has an average thickness of more than 1µm, said deposited layer having a thickness of less than 50µm.

**5.** A frame as in any one of the claims 1 to 4, wherein said polymer material is provided out of a thermoplastic polymer compound or a thermosetting polymer compound.

**6.** A frame (100) as in claim 5, wherein said thermosetting polymer compound is a BMC compound.

**7.** A frame (100) as in claim 5, wherein said thermosetting polymer compound is a TMC compound.

**8.** A frame (100) as in any one of the claims 5 to 7, wherein said thermosetting polymer compound is a polyester compound or comprises vinyl ester and glass fibers.

**9.** A frame (100) as in any one of claims 5 to 8, wherein said polymer compound comprises an inorganic reinforcement such as glass reinforcing elements, more particularly glass fibers or glass particles.

**10.** A frame as in any one of the claims 1 to 9, wherein a deposited layer of UV-protection material is a silicon resin-based layer.

**11.** A projection device comprising at least one frame (100) as in any one of the preceding claims.

**12.** A method to provide a frame (100) for positioning optical components (131, 210) of a projection device, comprising the steps of
• Forming a polymer material into at least a polymer part (110, 120, 130, 201, 202) of said frame having an outer polymer surface (132,133, 204, 205, 214, 215);
• providing a lacquer layer of UV-protection material to at least part of the outer polymer surface (132, 133, 204, 205, 214, 215) of said polymer part (110, 120, 130, 201, 202) of said frame (100) by dipping, submerging, painting, spin coating or spraying.

**13.** A method as in claim 12, wherein said frame (100) is completely provided by transfer or injection molding of a polymer material.

**14.** A method as in claims 12 or 13, wherein said frame is a one-piece transfer or injection molded frame.

**15.** A method as in any one of the claims 12 to 14, wherein said lacquered layer is provided :
by submerging said at least part of the outer polymer surface (132, 133) of said polymer part (201, 202) of said frame (100) in a liquid comprising said UV-protection material, or
by dipping said at least part of the outer polymer surface of said polymer part of said frame in a liquid comprising said UV-protection material, or
by spin coating onto said at least part of the outer polymer surface of said polymer part of said frame or
by spraying said UV-protection material onto said at least part of the outer polymer surface (204, 205, 214, 215) of said polymer part (201, 202) of said frame (100).

**16.** A method as in any one of the claims 12 to 15, wherein the polymer surface is blasted prior to providing the lacquer layer.
